# EUROPÄISCHE PATENTSCHRIFT

(11) **EP 1 808 625 B1**
(45) Veröffentlichungstag und Bekanntmachung des Hinweises auf die Patenterteilung: **22.04.2009**
(21) Anmeldenummer: 07100231.5
(22) Anmeldetag: 08.01.2007
(51) Int. Cl.: F16K 31/00, F16K 31/02

(54) **Betätigungseinrichtung für ein Ventil**
Actuating device for a valve
Dispositif d'actionnement d'une vanne

(30) Priorität: 11.01.2006 DE 102006000007
(43) Veröffentlichungstag der Anmeldung: 18.07.2007
(73) Patentinhaber: Honeywell Technologies Sarl, 1024 Ecublens (CH)
(72) Erfinder: Miecznik, Bert, 74834 Elztal (DE)
(74) Vertreter: TBK-Patent

(56) Entgegenhaltungen:
- EP-A2- 1 020 782
- DE-A1- 10 106 257
- DE-A1- 19 916 535

## Beschreibung

Die Erfindung bezieht sich auf eine Betätigungseinrichtung für ein Ventil, wie beispielsweise ein Durchflussventil, wie es in einer Heizungsanlage verwendet werden kann.

Solche Durchflussventile basieren darauf, dass der Durchfluss beim Herausziehen eines Ventilstößels ermöglicht und beim Einschieben eines Ventilstößels in das Ventil wieder unterbrochen wird. Eine Betätigungseinrichtung für Durchflussventile ist grundsätzlich aus der DE 31 40 472 A1 bekannt. Diese Betätigungseinrichtungen unterscheiden sich in ihrem Betriebsverhalten unter anderem dadurch, dass die einen das damit verbundene Ventil in der Ruhestellung geschlossen und die anderen das damit verbundene Ventil in der Ruhestellung geöffnet halten. Eine Aktivierung der Betätigungseinrichtung wird dementsprechend bei der einen Art das zuvor geschlossene Ventil öffnen, und bei der anderen Art das zuvor geöffnete Ventil schließen

Aus der DE 199 01 283 A1 und der DE 199 16 535 A1 sind Betätigungseinrichtungen bekannt, die bereits für beide Arten von Betriebsverhalten benutzt und zwischen diesen Arten verstellt werden können. Vor Montage einer solchen Betätigungseinrichtung auf dem Ventil muss die Betätigungseinrichtung entsprechend umgebaut werden. Dies erfolgt in dem erstgenannten Fall durch eine Drehung des Gehäuses um eine mit dem Ventil zu verbindende Fassung und in dem zweiten Fall durch die gegenseitige Verdrehung innerer und äußerer Kupplungselemente.

Der Erfindung liegt die Aufgabe zugrunde, eine Betätigungseinrichtung zu schaffen, deren Umstellbarkeit zur Anwendung bei unterschiedlichen Arten von Betriebsverhalten auf einfache Art und Weise erfolgen kann.

Diese Aufgabe wird durch eine Betätigungseinrichtung mit den im Patentanspruch 1 angegebenen Merkmalen gelöst.

Vorteilhafte Weiterbildungen der Erfindung sind Gegenstand der Unteransprüche.

Die Betätigungseinrichtung hat ein Betätigungselement, einen Stellantrieb mit einem Stellelement und einen Schieber. Das Betätigungselement, der Stellantrieb und das gegenüber dem Stellantrieb bewegbare Stellelement sind in Richtung einer Achse bewegbar. Diese Achse hat im wesentlichen dieselbe Orientierung wie die Betätigungsrichtung des Betätigungselementes. Der Schieber ist quer zur Achse bewegbar. Befindet sich der Schieber in einer ersten Position, ist eine Bewegung des Betätigungselementes nach Maßgabe des Stellelementes möglich. Befindet sich der Schieber in einer zweiten Position, folgt dagegen die Bewegung des Betätigungselementes einer Bewegung des Stellantriebes.

Somit kann auf einfache Art und Weise - nur durch Bewegung eines Schiebers quer zur Bewegungsrichtung - eine Adaption der vorgeschlagenen Betätigungseinrichtung an die beiden unterschiedlichen Arten des Betriebsverhaltens durchgeführt werden.

Durch Bewegung des Schiebers zwischen der ersten und der zweiten Position kann gleichzeitig auch ein den Stellantrieb tragender Träger zwischen einer ersten und einer zweiten Ruheposition bewegt werden. Hierdurch wird - wiederum durch einfache Mittel - die Adaption der Betätigungseinrichtung an den jeweiligen Anwendungsfall weiter vereinfacht.

Um diese Vereinfachung zu bewerkstelligen, ist auf dem Schieber ein Keil vorgesehen, der auf den Träger wirkt. Gleichzeitig ist in der Betätigungseinrichtung eine Feder vorgesehen, die den Träger in der ersten Position gegen den Keil und in der zweiten Position gegen den Schieber drückt.

Bei der vorgeschlagenen Betätigungseinrichtung wird durch die Betätigung des Schiebers das Betätigungselement quer zur Achse bewegt. Das Betätigungselement hat einen L-förmigen Querschnitt und ist so angeordnet, dass es ein zu betätigendes Ventil in beiden Positionen des Schiebers betätigen kann. Hierzu weist die Basis des L eine Länge auf, die größer als die Verschiebelänge des Schiebers ist.

Um weitere Elemente überflüssig zu machen, bewegt das Stellelement des Stellantriebes das Betätigungselement ohne weitere Zwischenelemente in eine Betätigungsrichtung, wenn sich der Schieber in der ersten Position befindet, wohingegen das Stellelement blockiert ist, wenn sich der Schieber in der zweiten Position befindet. Bei blockiertem Stellelement bewegt sich nun der Stellantrieb bei Aktivierung entgegen der Betätigungsrichtung. Das Betätigungselement stützt sich in der zweiten Position des Schiebers auf den Träger und kann entsprechend der Position des Trägers in die Betätigungseinrichtung einrücken. Durch eine verhältnismäßig einfache Mechanik wird hier nicht nur eine Anpassung an Betätigungseinrichtungen von unterschiedlichem Typ des Betriebsverhaltens, sondern auch eine Anpassung der Bewegungsrichtung an unterschiedliche Gegebenheiten ermöglicht.

Alle Merkmale des Anspruchssatzes sind beliebig miteinander kombinierbar, auch wenn dieser Umstand sich nicht in der aktuellen Rückbeziehung der Unteransprüche widerspiegelt.

Die Erfindung wird nachfolgend anhand der Figuren näher erläutert.

Die Figuren 1 und 2 zeigen eine Betätigungseinrichtung, die auf die Betätigung eines in Ruhestellung offenen Ventils eingestellt ist.

Die Figuren 3 und 4 zeigen eine Betätigungseinrichtung, die auf die Betätigung eines in Ruhestellung geschlossenen Ventils eingestellt ist.

In den Figuren ist mit 1 ein Betätigungselement, mit 2 ein Stellantrieb, mit 3 ein Stellelement, mit 4 ein Schieber, mit 5 ein Träger, mit 6 eine Feder, mit 7 ein Keil und mit 8 ein Gehäuse bezeichnet. Mit A ist die Betätigungsrichtung des Stellelementes 3 bezeichnet.

Das Gehäuse 8 ist in den Figuren von links unten nach rechts oben schraffiert. Der Träger 5 ist in den Figuren von links oben nach rechts unten schraffiert. Der Schieber 4 ist in den Figuren vertikal schraffiert und das Betätigungselement 1 ist in den Figuren kreuzweise schraffiert.

Das Einsatzgebiet der vorgeschlagenen Betätigungseinrichtung beschränkt sich nicht auf die Betätigung von thermisch gesteuerten Durchflussventilen zum Einsatz in Heizungsanlagen. In den Figuren ist jedoch als Beispiel eine Betätigungseinrichtung gezeigt, die für die thermisch gesteuerte Betätigung eines Ventils vorgesehen ist.

Thermostatventile dieser Art weisen eine Ventilspindel auf, die mittels einer Feder bis in eine Endstellung aus dem Ventil geschoben wird. Durch Eindrücken der Ventilspindel in das Ventil kann ein Ventilkörper relativ zu einem Ventilsitz bewegt werden.

Zum Eindrücken der Ventilspindel in das Ventil ist das Betätigungselement 1 vorgesehen. Es weist einen L-förmigen Querschnitt auf, so dass es unabhängig von seiner Position die Ventilspindel trifft. Die Basis des L-förmigen Betätigungselementes 1 dient zur Druckübermittlung.

Als Antrieb ist bei der Betätigungseinrichtung der Stellantrieb 2 vorgesehen. Grundsätzlich kann es sich hier um jeden linear wirkenden Antrieb handeln. Im Beispiel ist jedoch ein elektrothermischer Stellantrieb 2 vorgesehen, der bei Erwärmung durch Strom und/oder durch die Raumtemperatur ein Stellelement 3 verschiebt. Das Ausmaß der Verschiebung ist proportional zum zugeführten Strom oder der Raumtemperatur.

Der Stellantrieb 2 ist an einem Träger 5 angeordnet. Stellantrieb 2 und Träger 5 sind in axialer Richtung im Gehäuse bewegbar, wobei die Richtung dieser axialen Bewegung mit der Betätigungsrichtung des Stellelementes des Stellantriebes übereinstimmt.

Die Einheit aus Stellantrieb 2 und Träger 5 ist mittels der Feder 6 gegenüber dem Gehäuse 8 in Betätigungsrichtung A vorgespannt. Die Feder 6 kann auf den Stellantrieb 2 oder den Träger 5 wirken. In dem in den Figuren gezeigten Beispiel wirkt die Feder 6 auf den Stellantrieb. Durch die Wirkung der Feder 6 wird die Einheit aus Stellantrieb 2 und Träger 5 in einer Ruheposition gehalten.

Der Schieber 4 ist quer zur Betätigungsrichtung A bzw. zu der Achse des Stellantriebes verschiebbar und stützt sich in Betätigungsrichtung gegen das Gehäuse 8. Auf dem Schieber 4 ist der Keil 7 vorgesehen, der sich zusammen mit dem Schieber 4 bewegt.

Ebenfalls mit dem Schieber 4 mit bewegt wird das Betätigungselement 1.

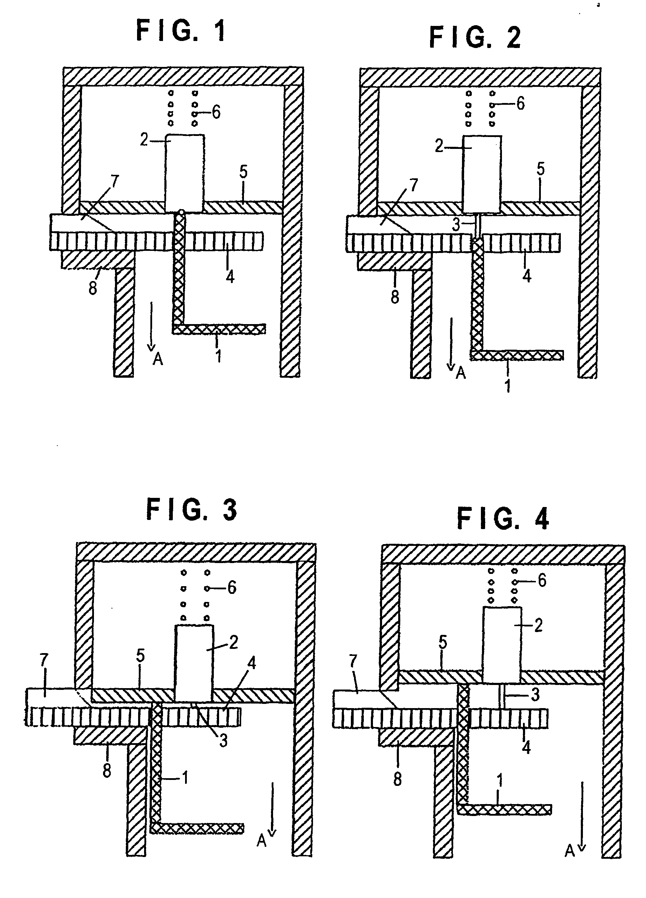

Die Figuren 1 und 2 zeigen eine Betätigungseinrichtung, deren Schieber 4 so eingestellt ist, dass die Betätigungseinrichtung zur Betätigung eines normalerweise geöffneten Ventils eingestellt ist.

Die Figur 1 zeigt eine Stellung des Betätigungselementes 1, in der das Ventil offen ist, wohingegen die Stellung des Betätigungselementes 1 gemäß Figur 2 einer Stellung entspricht, in der das Ventil geschlossen ist.

Handelsübliche Ventile weisen eine Feder auf, mit der sie den Stößel bis in eine Endposition aus dem Ventil schieben. Die Einstellung des Ventils erfolgt durch Einschieben des Stößels, bzw. dadurch, dass man es dem Stößel erlaubt, vermittels der Kraft der in dem Ventil enthaltenen Feder aus dem Ventil auszurücken und damit in die Betätigungseinrichtung einzurücken. Selbstverständlich ist die Kraft der Feder 6 der Betätigungseinrichtung um ein Vielfaches größer zu wählen, als die von der Feder des Ventils aufgebrachte Gegenkraft. Die Kraft der Feder 6 ist dabei jedoch so zu begrenzen, dass sie von der Kraft des bei Erwärmung aus dem Stellantrieb austretenden Stellelements ihrerseits mit hinreichender Sicherheit überschritten wird.

In den Figuren 1 und 2 befindet sich der Schieber 4 in der ersten Position. Hierdurch ist der Keil 7 in die Betätigungseinrichtung derart eingeschoben, dass der Träger 5 entgegen der Kraft der Feder 6 und entgegen der Betätigungsrichtung A in die erste Ruheposition bewegt wird. Das Betätigungselement 1 wird hierdurch in die Betätigungseinrichtung eingeschoben, bis es im Bereich des Stellelementes 3 an den Stellantrieb 2 anstößt.

In Folge der voll geöffneten Position des Ventils tritt nun eine Erwärmung der Umgebung der Betätigungseinrichtung ein, die auch zu einer Erwärmung des Stellantriebs 2 führt. Durch diese Erwärmung des Stellantriebs 2 tritt das Stellelement 3 in Betätigungsrichtung aus dem Stellantrieb 2 aus. Da die Feder 6 um ein Vielfaches stärker als die in dem Ventil vorgesehene Feder ist, wird das Betätigungselement 1 in Betätigungsrichtung A bewegt und das Ventil geschlossen. Hierdurch wird die weitere Erwärmung der Umgebung beendet, was dazu führt, dass das Stellelement abkühlt und das Stellelement 3 entgegen der Betätigungsrichtung A wieder im Stellantrieb verschwindet. Dieser Vorgang wiederholt sich mit kleiner werdenden Schritten, bis ein stabiler Zustand auftritt, bei dem das Ausmaß der Verschiebung des Stellelementes 3 der gewünschten Temperatur entspricht.

Bei einem Einsatz als Stellantrieb kann die Regelung statt über die Wechselwirkung mit der Umgebungstemperatur auch durch ein extern zu generierendes Steuersignal beeinflusst werden. Dieses Steuersignal kann dann direkt auf den Stellantrieb 2 einwirken, beispielsweise über eine elektrische Beheizung des Stellantriebs, um zu dem gewünschten Austritt des Stellelements 3 aus dem Antrieb 2 zu gelangen. Bei entsprechender Wahl der Antriebsart des Stellantriebs kann das externe Steuersignal beispielsweise auch elektromagnetisch auf den Antrieb einwirken.

Der Schieber 4 in den Figuren 3 und 4 befindet sich in der zweiten Position. Die Betätigungseinrichtung gemäß der Figuren 3 und 4 ist somit für die Betätigung eines normalerweise geschlossenen Ventils vorgesehen. Das Betätigungselement 1 befindet sich in der Figur 3 in einer Position, in der das Ventil geschlossen ist, wohingegen es sich in der Figur 4 in einer Position befindet, in der das Ventil geöffnet ist.

Da sich der Schieber 4 in der zweiten Position befindet, befindet sich der mit dem Schieber 4 verbundene Keil 7 nicht zwischen dem Träger 5 und dem Schieber 4. Der Träger 5 wird daher von der Feder 6 in die zweite Ruheposition verschoben.

Das Betätigungselement 1 wird zusammen mit dem Schieber 4 in eine zweite Position verschoben, in der es nicht mit dem Stellelement 3 des Stellantriebes 2 korrespondiert. Stattdessen wird es durch die Kraft der im Ventil vorgesehenen Feder gegen den Träger 5 gepresst.

In der zweiten Position des Schiebers 4 ist das Stellelement 3 des Stellantriebes 2 blockiert. Eine Erwärmung in Folge des gemäß Figur 3 geschlossenen Ventils, hier beispielsweise bei Verwendung in einem Kältekreislauf, führt zu einer Aktivierung des Stellantriebes, die wie auch bereits bei der Betätigungseinrichtung nach den Figuren 1 und 2, wiederum auch unter der Einwirkung von zusätzlichen externen Steuersignalen erfolgen kann. Da das Stellelement 3 aber blockiert ist, führt die Aktivierung des Stellantriebes 2 nicht zu einer Bewegung des Stellelementes 3 in Betätigungsrichtung A, sondern zu einer Bewegung des Stellantriebes 2 entgegen der Betätigungsrichtung A.

Die Situation nach erfolgter Bewegung ist in der Figur 4 dargestellt. Das Stellelement 3 ist voll ausgefahren und der Stellantrieb 2 somit am Anschlag. Das Betätigungselement 1 wird vermittels der Kraft der Feder des Ventils in die Betätigungseinrichtung 1 einrücken, soweit ihm dies durch die Position des Trägers 5 ermöglicht wird. Dadurch wird das Ventil geöffnet und es stellt sich eine Abkühlung des Stellantriebes 2 ein, bis wiederum ein stabiler Zustand erreicht ist.

So weit zu der in den Figuren gezeigten Betätigungseinrichtung.

Alternativ zu dem in den Figuren gezeigten Betätigungselement mit L-förmigem Querschnitt kann dasselbe auch einen T-förmigen Querschnitt aufweisen. Die Betätigung der Spindel des zu betätigenden Ventils erfolgt dann entweder links oder rechts von dem vertikalen Bestandteil des umgekehrten T.

Ebenfalls können gleichzeitig eine Mehrzahl von Keilen vorgesehen sein, die in der zweiten Position in hierfür vorgesehenen Aussparungen im Tragelement verschwinden.

Auch kann sich der Schieber 4 auf beiden Seiten in Betätigungsrichtung auf ein entsprechend geformtes Gehäuseelement stützen.

Gleichfalls ist es nicht erforderlich, dass ein Teil des Schiebers über die Außenseite des Gehäuses 8 hinaus ragt. Vielmehr kann alternativ hierzu der Schieber in der ersten Position mit der linken Seite des Gehäuses bündig sein und in der zweiten Position mit der rechten Seite des Gehäuses bündig sein, so dass zu seiner Verschiebung beispielsweise ein Schraubenzieher erforderlich ist.

Bei der Betätigungseinrichtung gemäß der Figuren 1 bis 4 wird der Stellantrieb 2 zusammen mit dem Träger 5 jeweils gemeinsam durch das Gehäuse bewegt. Bei entsprechender Ausführung und Lagerung des Stellantriebes 2 ist der Träger nicht erforderlich, oder derselbe einstückig mit dem Stellantrieb ausgebildet. Die Funktion des Trägers 5 übernimmt dann das entsprechend ausgebildete Element des Stellantriebes 2.

Der Schieber 4 gemäß der Figuren 1 bis 4 ist gemeinsam mit dem Keil 7 wie ein Schlitten im Gehäuse 8 verschiebbar. Alternativ hierzu kann vorgesehen sein, ihn mit einem Gewinde zu versehen und am Gehäuse ein entsprechendes Gegengewinde vorzusehen, so dass er durch Schrauben zwischen der ersten und zweiten Position bewegt werden kann. Um die Funktion des Keils dabei ausüben zu können, ist dieser schraubenförmige Schieber zumindest teilweise konisch auszuführen. Eine solche Ausgestaltung des Schiebers erlaubt eine Verschiebung mit geringem Kraftaufwand.

Die in den Figuren gezeigte Betätigungseinrichtung weist als einzige Feder die Feder 6 auf. Alternativ hierzu kann eine separate Rückholfeder für das Betätigungselement vorgesehen sein.

## Patentansprüche

1. Betätigungseinrichtung für ein Ventil mit
(a) einem in Richtung einer Achse bewegbaren Betätigungselement (1),
(b) einem in Axialrichtung bewegbaren Stellantrieb (2), der ein in Axialrichtung und gegenüber dem Stellantrieb bewegbares Stellelement (3) hat, und
(c) wobei der Stellantrieb auf einem zusammen mit ihm bewegbaren Träger (5) angeordnet ist, und mittels einer Fe- der (6) in einer Ruheposition gehalten wird, **dadurch gekennzeichnet, dass** die Betätigungseinrichtung
(d) einen quer zur Achse bewegbaren Schieber (4) hat,
(e) wobei eine Bewegung des Betätigungselements in einer ersten Position des Schiebers einer Bewegung des Stellelementes und in einer zweiten Position des Schiebers einer Bewegung des Stellantriebes folgen kann,
(f) wobei der Träger zwischen einer ersten Ruheposition und einer zweiten Ruheposition bewegt wird, wenn der Schieber zwischen der ersten Position und der zweiten Positon bewegt wird.

2. Betätigungseinrichtung nach Anspruch 1, **dadurch gekennzeichnet, dass** der Schieber einen Keil (7) aufweist, der eine Verschiebung des Trägers ermöglicht und dass die Feder den Träger gegen den Schieber oder gegen den Keil drückt.

3. Betätigungseinrichtung nach Anspruch 1, **dadurch gekennzeichnet, dass** das Betätigungselement mittels des Schiebers quer zur Achse bewegbar ist.

4. Betätigungseinrichtung nach Anspruch 3, **dadurch gekennzeichnet, dass** das Betätigungselement einen L-förmigen Querschnitt aufweist und so angeordnet ist, dass es ein Ventil in beiden Positionen des Schiebers betätigen kann.

5. Betätigungseinrichtung nach Anspruch 1, **dadurch gekennzeichnet, dass** das Stellelement das Betätigungselement in eine Betätigungsrichtung (A) bewegt, wenn sich der Schieber in der ersten Position befindet.

6. Betätigungseinrichtung nach Anspruch 5, **dadurch gekennzeichnet, dass** das Stellelement blockiert ist, wenn sich der Schieber in der zweiten Position befindet, und dass sich der Stellantrieb bei Aktivierung mit blockiertem Stellantrieb entgegen der Betätigungsrichtung bewegt.

7. Betätigungseinrichtung nach Anspruch 6**, dadurch gekennzeichnet, dass** sich das Betätigungselement in der zweiten Position des Schiebers auf den Träger stützt und entsprechend der Position des Trägers in die Betätigungseinrichtung einrücken kann.

8. Betätigungseinrichtung nach Anspruch 7, **dadurch gekennzeichnet, dass** das Betätigungselement mittels einer Feder entgegen der Betätigungsrichtung vorgespannt ist.

## Claims

1. Actuating device for a valve, with
(a) an actuating element (1) which is movable in the direction of an axis,
(b) an actuator (2) which is movable in the axial direction and has a controlling element (3) which is movable in the axial direction and in relation to the actuator, and
(c) wherein the actuator is arranged on a support (5) which is movable together therewith, and is held in an inoperative position by means of a spring (6),
**characterized in that** the actuating device
(d) has a slider (4) which is movable transversely with respect to the axis,
(e) with it being possible, in a first position of the slider, for a movement of the actuating element to follow a movement of the controlling element and, in a second position of the slider, to follow a movement of the actuator,
(f) the support being moved between a first inoperative position and a second inoperative position when the slider is moved between the first position and the second position.

2. Actuating device according to Claim 1, **characterized in that** the slider has a wedge (7) which permits displacement of the support, and **in that** the spring presses the support against the slider or against the wedge.

3. Actuating device according to Claim 1, **characterized in that** the actuating element is movable transversely with respect to the axis by means of the slider.

4. Actuating device according to Claim 3, **characterized in that** the actuating element has an L-shaped cross section and is arranged in such a manner that it can actuate a valve in both positions of the slider.

5. Actuating device according to Claim 1, **characterized in that** the controlling element moves the actuating element in an actuating direction (A) when the slider is in the first position.

6. Actuating device according to Claim 5, **characterized in that** the controlling element is blocked when the slider is in the second position, and **in that** the actuator, when activated with the controlling element blocked, moves counter to the actuating direction.

7. Actuating device according to Claim 6, **characterized in that**, in the second position of the slider, the actuating element is supported on the support and, corresponding to the position of the support, can engage in the actuating direction.

8. Actuating device according to Claim 7, **characterized in that** the actuating element is prestressed counter to the actuating direction by means of a spring.

## Revendications

1. Dispositif d'actionnement pour une soupape comprenant :
(a) un élément d'actionnement (1) déplaçable dans la direction d'un axe,
(b) un entraînement de commande (2) déplaçable dans la direction axiale, lequel présente un élément de commande (3) déplaçable dans la direction axiale et par rapport à l'entraînement de commande,
(c) l'entraînement de commande étant disposé sur un support (5) déplaçable conjointement avec lui, et étant maintenu dans une position de repos au moyen d'un ressort (6), **caractérisé en ce que** le dispositif d'actionnement a
(d) un coulisseau (4) déplaçable transversalement à l'axe,
(e) un déplacement de l'élément d'actionnement dans une première position du coulisseau pouvant suivre un déplacement de l'élément de commande et dans une deuxième position du coulisseau pouvant suivre un déplacement de l'entraînement de commande,
(f) le support étant déplacé entre une première position de repos et une deuxième position de repos, lorsque le coulisseau est déplacé entre la première position et la deuxième position.

2. Dispositif d'actionnement selon la revendication 1, **caractérisé en ce que** le coulisseau présente une clavette (7), qui permet un coulissement du support, et **en ce que** le ressort presse le support contre le coulisseau ou contre la clavette.

3. Dispositif d'actionnement selon la revendication 1, **caractérisé en ce que** l'élément d'actionnement peut être déplacé transversalement à l'axe au moyen du coulisseau.

4. Dispositif d'actionnement selon la revendication 3, **caractérisé en ce que** l'élément d'actionnement présente une section transversale en forme de L et est disposé de telle sorte qu'il puisse actionner une soupape dans les deux positions du coulisseau.

5. Dispositif d'actionnement selon la revendication 1, **caractérisé en ce que** l'élément de commande déplace l'élément d'actionnement dans une direction d'actionnement (A) lorsque le coulisseau se trouve dans la première position.

6. Dispositif d'actionnement selon la revendication 5**, caractérisé en ce que** l'élément de commande est bloqué lorsque le coulisseau se trouve dans la deuxième position, et **en ce que** l'entraînement de commande se déplace à l'encontre de la direction d'élément lors de l'actionnement avec l'entraînement de commande bloqué.

7. Dispositif d'actionnement selon la revendication 6, **caractérisé en ce que** l'élément d'actionnement s'appuie dans la deuxième position du coulisseau sur le support et peut s'embrayer en fonction de la position du support dans le dispositif d'actionnement.

8. Dispositif selon la revendication 7, **caractérisé en ce que** l'élément d'actionnement est précontraint au moyen d'un ressort à l'encontre de la direction d'actionnement.
